# EUROPEAN PATENT SPECIFICATION

(11) **EP 2 273 423 B1**
(45) Date of publication and mention of the grant of the patent: **10.10.2012**
(21) Application number: 10162968.1
(22) Date of filing: 17.05.2010
(51) Int. Cl.: G06K 7/08

(54) **Supporting apparatus for a magnetic head and card processing apparatus**
Haltevorrichtung für einen Magnetkopf und Kartenverarbeitungsvorrichtung
Appareil de support pour tête magnétique et appareil de traitement de carte

(30) Priority: 22.05.2009 JP 2009124505
(43) Date of publication of application: 12.01.2011
(73) Proprietor: Hitachi-Omron Terminal Solutions, Corp., Tokyo 141-8576 (JP)
(72) Inventor: Ishiguro, Jun, Tokyo 100-8220 (JP); Nakabo, Akinobu, Tokyo 100-8220 (JP); Kageyama, Takeshi, Tokyo 100-8220 (JP); Tadamasa, Akihiro, Tokyo 100-8220 (JP)
(74) Representative: MERH-IP Matias Erny Reichl Hoffmann

(56) References cited:
- EP-A2- 1 195 747
- WO-A1-96/23273

## Description

### Technical Field

The present invention relates to a supporting apparatus for a magnetic head that supports the magnetic head movably, and also relates to a card processing apparatus provided with such supporting apparatus.

### Background Art

Conventionally, a magnetic head unit having a magnetic head and a supporting apparatus for the magnetic head has been known (for example, refer to Patent Literature 1).

EP 1 195 747 A2 (family member of JP 3 664 644 B2) discloses, as shown in FIGS. 14 and 15, a magnetic head unit 600 including a magnetic head 550 for performing a process on a card and a supporting mechanism 500 for supporting the magnetic head 550 movably in an arrow Z1 direction and an arrow Z2 direction. The magnetic head 550 is provided with a pair of shaft parts 550a.

The supporting mechanism 500 includes a frame member 501 having a pair of plate parts 501a, a movable member 502 swingably attached to the frame member 501 and having a pair of arms 502a, and a spring member 503 biasing the movable member 502 in an A direction.

At a lower end of the plate part 501a of the frame member 501, a notch 501b is formed so as to extend in the arrow Z2 direction. At a front end of the arm 502a of the movable member 502, a notch 502b is formed so as to extend in an arrow Y2 direction. A shaft part 550a of the magnetic head 550 is disposed in a region where the notches 501b and 502b cross each other. That is, the notch 502b of the movable member 502 supports the shaft part 550a of the magnetic head 550 and the notch 501b of the frame member 501 limits movement of the shaft part 550a in an arrow Y1 direction and the arrow Y2 direction.

In the magnetic head unit 600 disclosed in EP 1 195 747 A2 in order to detach the magnetic head 550 from the supporting mechanism 500, it is required to disengage the shaft part 550a from the notches 501b and 502b by lifting an end part of the movable member 502 on the arrow Y2 side in a D direction against the bias force of the spring member 503 to swing the arm 502a of the movable member 502 in a B direction.

In the conventional magnetic head unit 600 disclosed in EP 1 195 747 A2, however, it may be difficult to lift the end part of the movable member 502 on the arrow Y2 side in a D direction because of a disposition of other components of a card processing apparatus adjacent to the end part.

The present invention is directed to solve the aforementioned problem and aims to provide a supporting apparatus for a magnetic head and a card processing apparatus in which an arm of a movable member can be easily swung when the magnetic head is attached or detached.

### Solution to Problems

The invention relates to a supporting apparatus according to claim 1 and a card processing apparatus according to claim 8.

With this configuration, it is possible to swing the arm easily by using the hook formed in the arm. Therefore, the magnetic head can be easily attached and detached.

In the above-mentioned supporting apparatus for a magnetic head, the first notch may be formed at a lower end of the plate part, the second notch may be formed at a front end of the arm, and the hook may be formed at a lower end of the arm so as to project downward. With this configuration, attachment and detachment of the magnetic head can be easily performed from below the supporting apparatus.

In this case, the movable member may be slidably attached to the frame member, and a slant part may be formed in a region corresponding to the first notch at the lower end of the arm. With this configuration, by inserting the shaft part of the magnetic head into the first notch in the frame member, the shaft part comes into contact with the slant part in the movable member and thus the movable member can be slid. Therefore, it is possible to dispose the shaft part of the magnetic head in a region where the first and second notches cross each other by inserting the shaft part into the first notch in the frame member. Consequently, the magnetic head can be attached more easily.

In the above-mentioned supporting apparatus for a magnetic head, the frame member may be provided so that the pair of plate parts is perpendicular to a card insertion direction, the movable member may be disposed between the pair of plate parts, and the magnetic head may be disposed between the pair of arms. A wording "perpendicular to a card insertion direction" includes "substantially perpendicular to a card insertion direction". With this configuration, by disposing the magnetic head between the pair of arms, the magnetic head can be suppressed from moving in a card conveyance direction when the card comes into contact with the magnetic head.

A card processing apparatus according to the present invention comprises a magnetic head having a shaft part and performing a process on a card, and any of the above-mentioned supporting apparatus for the magnetic head.

With this configuration, it is possible to swing the arm easily by using the hook formed in the arm. Therefore, the magnetic head can be easily attached and detached.

### Advantageous Effects of Invention

According to the present invention, it is possible to provide a supporting apparatus for a magnetic head and a card processing apparatus in which an arm of a movable member can be easily swung when the magnetic head is attached or detached.

Other objects, features and advantageous of the present invention will become apparent from the following description of the embodiments of the invention taken in connection with the accompanying drawings.

### Brief Description of Drawings

Fig. 1 is a block diagram showing a configuration of an ATM in which a card processing apparatus according to an embodiment of the present invention is mounted;
Fig. 2 is a schematic side view of the card processing apparatus in Fig. 1;
Fig. 3 is a front view of a magnetic head unit in Fig. 2;
Fig. 4 is a side view of the magnetic head unit in Fig.3;
Fig. 5 is a top view of the magnetic head unit in Fig.3;
Fig. 6 is a side view showing a state in which a magnetic head is detached from the magnetic head unit in Fig.4;
Fig. 7 is a sectional view along 300-300 line in Fig.6;
Fig. 8 is a block diagram showing an electrical configuration of the card processing apparatus in Fig. 1;
Fig. 9 is a view for illustrating operation when the magnetic head is attached to a supporting mechanism in Fig. 7;
Fig. 10 is a view for illustrating operation when the magnetic head is detached from the magnetic head unit in Fig. 3;
Fig. 11 is a view for illustrating operation when the magnetic head is detached from the magnetic head unit in Fig. 3;
Fig. 12 is a front view of a magnetic head unit according to a first modification of the present embodiment;
Fig. 13 is a front view of a magnetic head unit according to a second modification of the present embodiment;

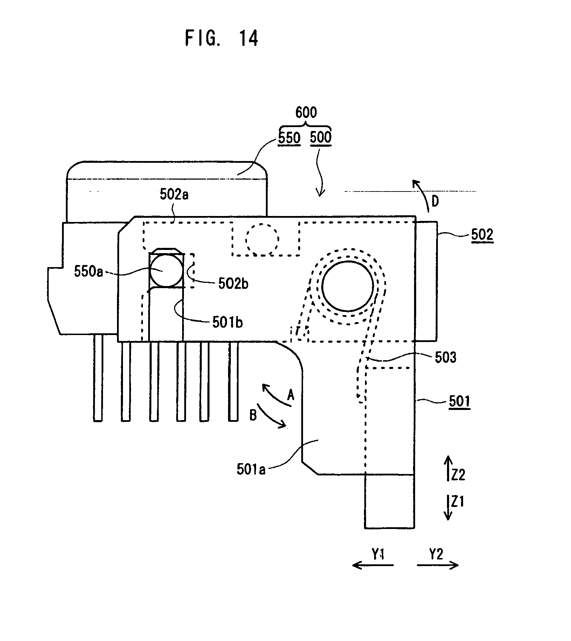

Fig. 14 is a front view of a conventional magnetic head unit; and

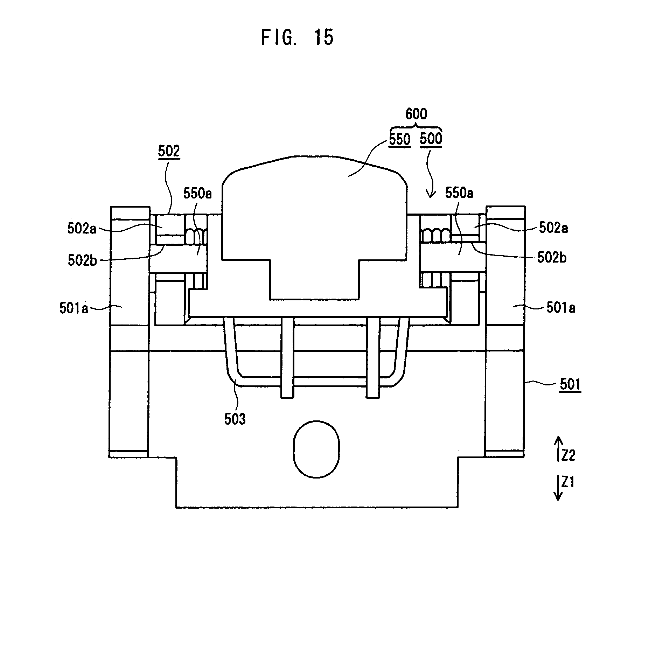

Fig. 15 is a side view of the magnetic head unit in Fig. 14.
Description of Embodiments

An embodiment of the present invention will be described below with reference to the drawings. In the embodiment described below, the example in which the present invention is applied to a card processing apparatus mounted in an ATM (Automated Teller Machine) will be described.

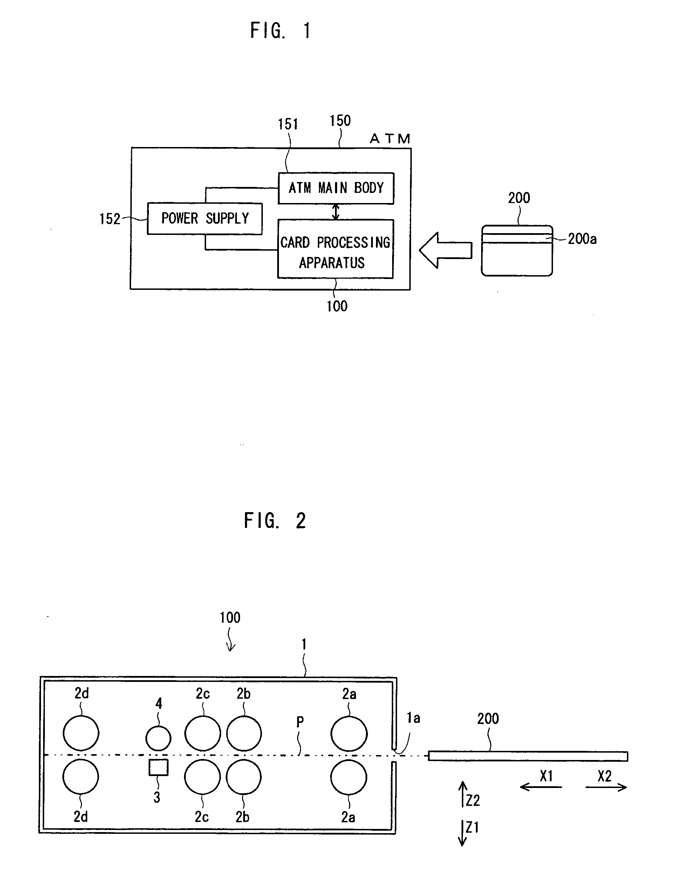

First, with reference to FIGS. 1 to 8, configurations of a card processing apparatus 100 and an ATM 150 according to the present embodiment will be described.

As shown in FIG. 1, the ATM 150 has an ATM main body 151, a power supply 152, and the card processing apparatus 100. The ATM 150 is placed in a financial institution or the like so that a user makes a transaction such as withdrawal of cash.

The card processing apparatus 100 according to an embodiment of the present invention is mounted in the ATM 150. Electric power is supplied to the card processing apparatus 100 from the power supply 152. The card processing apparatus 100 performs a predetermined process on a card 200 inserted by the user.

Specifically, the cardprocessing apparatus 100 reads data stored in a magnetic stripe 200a of the card 200 and transmits the read data to the ATM main body 151. The card processing apparatus 100 also receives data transmitted from the ATM main body 151 and writes the received data on the magnetic stripe 200a of the card 200. Furthermore, the card processing apparatus 100 erases the data recorded in the magnetic stripe 200a of the card 200 in accordance with an instruction from the ATM main body 151.

As shown in FIG. 2, the card processing apparatus 100 includes a housing 1, conveying rollers 2a to 2d, a magnetic head unit 3, and a press roller 4. The housing 1 has, at its end on an arrow X2 side, an insertion port 1a into which the card 200 is inserted. Pairs of upper and lower conveying rollers 2a to 2d are provided so that they sandwich a conveyance path P. The conveying rollers 2a to 2d convey the card 200 in an insertion direction (an arrow X1 direction) and an ejection direction (the arrow X2 direction).

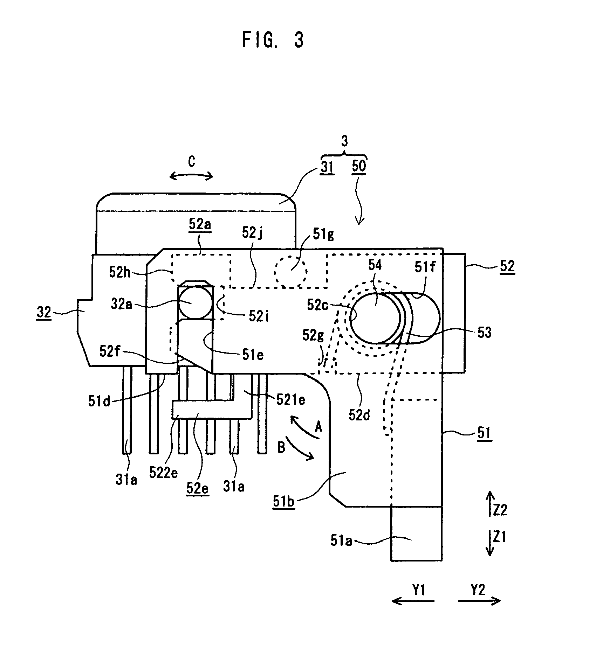

The magnetic head unit 3 is disposed below the press roller 4. The magnetic head unit 3 includes, as shown in FIG. 3, a magnetic head 31 for performing a predetermined process on the magnetic stripe 200a (see FIG. 1) of the card 200, and a supporting mechanism 50 for supporting the magnetic head 31 so as to be movable in an arrow Z1 direction and an arrow Z2 direction. The supporting mechanism 50 is an example of a "supporting apparatus" in the present invention.

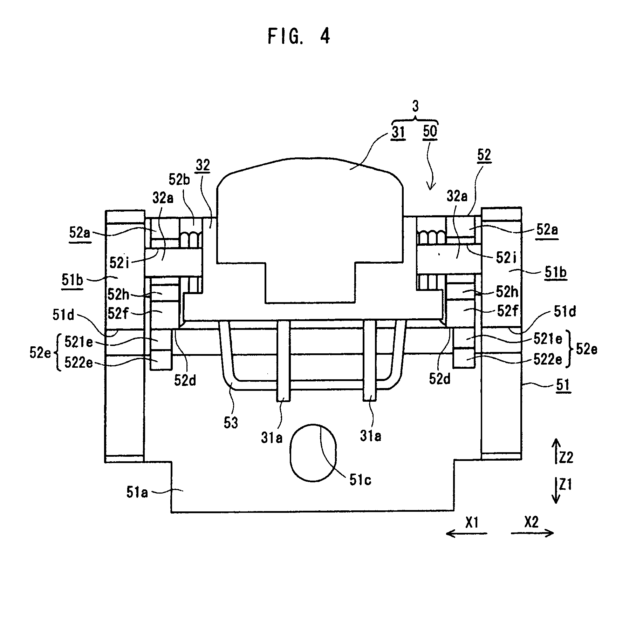

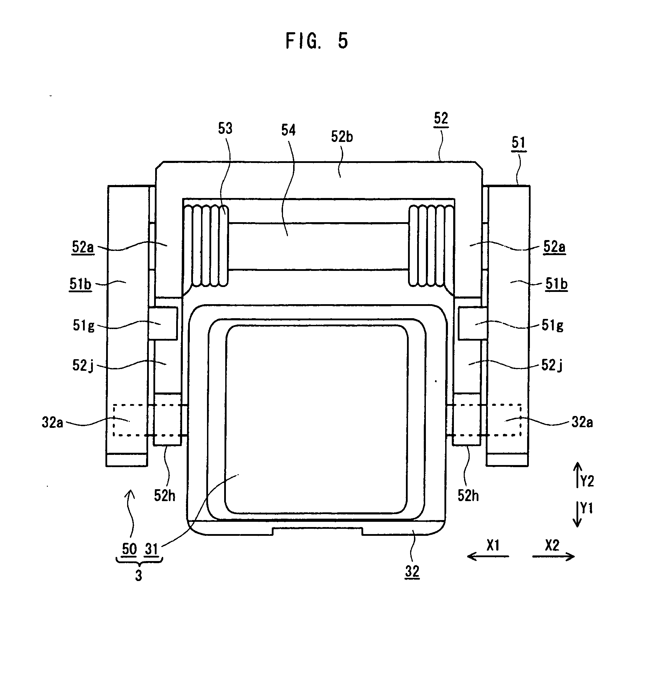

The magnetic head 31 has a plurality of lead terminals 31a extending downward (the arrow Z1 direction). The magnetic head 31 is held by a bracket 32. The bracket 32 has a pair of shaft parts 32a as shown in FIGS. 4 and 5. The pair of shaft parts 32a is formed so that one projects in the arrow X1 direction, and the other projects in the arrow X2 direction.

The supporting mechanism 50 includes, as shown in FIGS. 3 to 7, a frame member 51, a movable member 52 swingably attached to the frame member 51, a spring member 53 biasing the movable member 52, and a spindle 54. The spring member 53 is an example of an "biasing member" in the present invention. The frame member 51 and the movable member 52 are made of resin, and the spring member 53 and the spindle 54 are made of metal.

The frame member 51 has a base part 51a and a pair of plate parts 51b formed at both ends of the base part 51a. In the base part 51a, an attachment hole 51c (see FIG. 4) for attaching the frame member 51 to the housing 1 (see FIG. 2) is formed. The pair of plate parts 51b is disposed so as to face each other in the arrow X1 direction (the arrow X2 direction). The plate parts 51b are disposed so as to be substantially perpendicular to the insertion direction (the arrow X1 direction) of the card 200 (see FIG. 1).

As shown in FIG. 3, the plate part 51b has a perpendicular part extending from the base part 51a in the arrow Z2 direction and a horizontal part extending in an arrow Y1 direction and is formed in an inverted L shape in front view. At a lower end 51d in the horizontal part of the plate part 51b, a notch 51e is formed so as to extend in the arrow Z2 direction. The notch 51e is an example of a "first notch" in the present invention, and the arrow Z2 direction is an example of a "first direction" in the present invention. The notch 51e limits movement of the shaft part 32a in the arrow Y1 direction and the arrow Y2 direction.

In the plate part 51b, a groove 51f that supports the spindle 54 so as to be slidable in the arrow Y2 direction (the arrow Y1 direction) is formed. As shown in FIG. 5, a columnar projection 51g is formed on an inner face of the plate part 51b.

The movable member 52 has a pair of arms 52a and a coupling part 52b that couples the pair of arms 52a. The movable member 52 is disposed between the pair of plate parts 51b of the frame member 51, and the arms 52a are disposed adjacent to the inner face of the plate parts 51b. The magnetic head 31 is disposed between the pair of arms 52a.

The arms 52a are formed so as to extend in the arrow Y1 direction from both ends of the coupling part 52b. Each of the arms 52a is formed in a plate shape and disposed so as to be substantially perpendicular to the insertion direction (the arrow X1 direction) of the card 200 (see FIG. 1). In the arm 52a, as shown in FIG. 3, an insertion hole 52c into which the spindle 54 is to be inserted is formed on the arrow Y2 side (the coupling part 52b side).

An L-shaped hook 52e is formed at a lower end 52d of the arm 52a. Specifically, the hook 52e has a vertical part 521e extending in the arrow Z1 direction from the lower end 52d and a horizontal part 522e extending in the arrow Y1 direction from a front end of the vertical part 521e. Therefore, the hook 52e is formed so as to project downward from the lower end 51d of the plate part 51b in front view.

At the lower end 52d of the arm 52a, a slant part 52f is formed. That is, a border between the lower end 52d and a front end 52h of the arm 52a is chamfered. The slant part 52f is positioned in a region corresponding to the notch 51e in the front view (the arrow Y1 direction and the arrow Y2 direction). Furthermore, at the lower end 52d of the arm 52a, an engagement part 52g is formed.

At the front end 52h of the arm 52a, a notch 52i is formed so as to extend in the arrow Y2 direction. The notch 52i is an example of a "second notch" in the present invention, and the arrow Y2 direction is an example of a "second direction" in the present invention. The notch 52i is formed so as to be substantially perpendicular to the notch 51e in front view and supports the shaft part 32a. That is, the shaft part 32a of the bracket 32 that holds the magnetic head 31 is disposed in a region where the notches 51e and 52i cross each other in front view.

A recess 52j which engages with the projection 51g is formed at an upper end of the arm 52a. That is, the recess 52j in the arm 52a and the projection 51g in the plate part 51b function as a swing limiting part that limits swing of the arm 52a in an A direction.

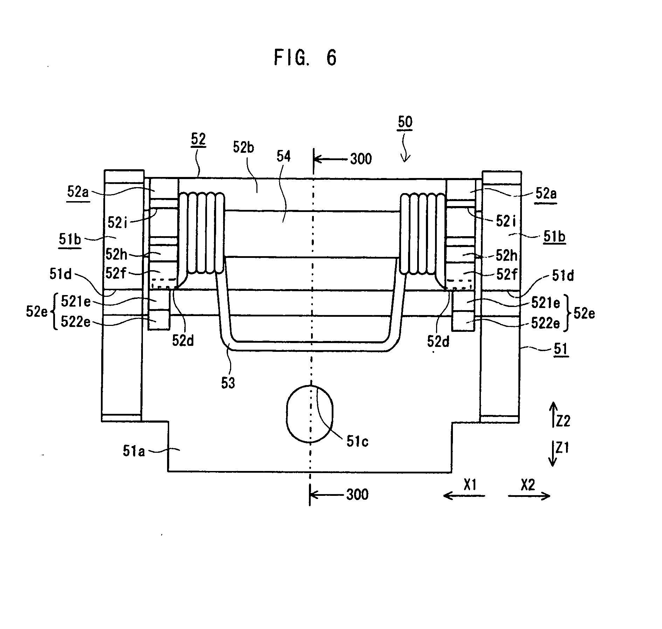

As shown in FIGS. 3 and 6, both ends of the spring member 53 are engaged with the engagement parts 52g of the arms 52a and a center part of the spring member 53 is engaged with the base part 51a of the frame member 51. Thus, the spring member 53 biases the movable member 52 in the A direction so that the movable member 52 is disposed in a predetermined position shown in FIG. 3.

The spindle 54 is inserted in the groove 51f of the frame member 51 and inserted in the insertion hole 52c of the movable member 52, thereby supporting the movable member 52 swingably in the A and B directions and slidably in the arrow Y1 and Y2 directions.

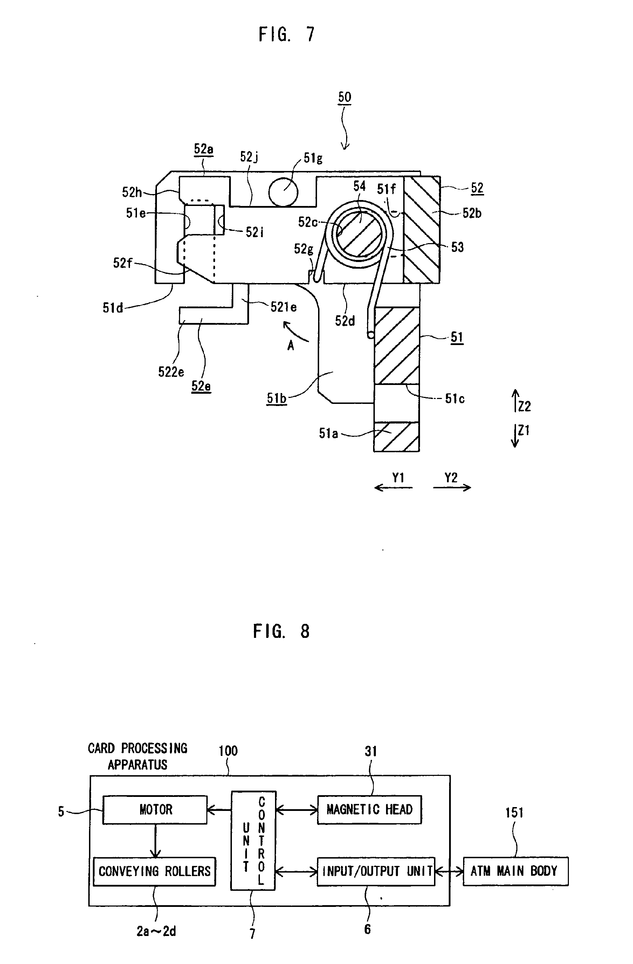

As shown in FIG. 8, the card processing apparatus 100 includes a motor 5 for driving the conveying rollers 2a to 2d, an input/output unit 6 for transmitting/receiving data to/from the ATM main body 151, and a control unit 7 that controls the operation of the card processing apparatus 100.

Referring now to FIGS. 1 to 3, the operation of the cardprocessing apparatus 100 according to the present embodiment, when the magnetic head unit 3 performs card processing, will be described.

In FIG. 2, the card 200 inserted from the insertion port 1a of the housing 1 is conveyed by the conveying rollers 2a to 2d. When the card 200 passes between the press roller 4 and the magnetic head unit 3, the magnetic stripe 200a (see FIG. 1) of the card 200 comes into contact with the magnetic head 31 (see FIG. 3). By the magnetic head 31 being in a contact state, a predetermined process is performed on the magnetic stripe 200a of the card 200.

When the magnetic head 31 contacts with the card 200, the magnetic head 31 shown in FIG. 3 moves in the arrow Z1 direction against the bias force of the spring member 53, and the magnetic head 31 also swings in a C direction around the shaft parts 32a as a center in accordance with a warp of the card 200. Thereafter, when the card 200 passes and the contact between the card 200 and the magnetic head 31 is released, the magnetic head 31 returns to the predetermined position shown in FIG. 3 by the bias force of the spring member 53.

Next, with reference to FIGS. 3, 7 and 9, the operation of the card processing apparatus 100 according to the present embodiment, when the magnetic head 31 is attached, will be described.

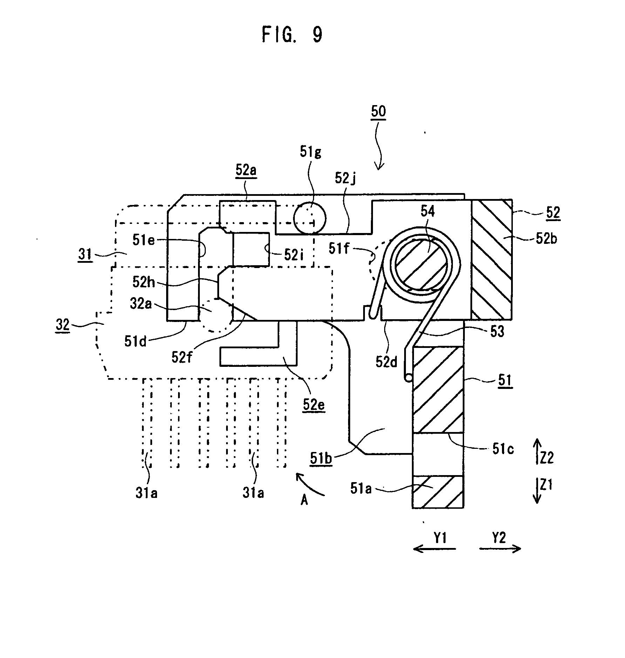

First, a worker inserts the shaft parts 32a (see FIG. 9) of the bracket 32 holding the magnetic head 31 in the arrow Z2 direction along the notches 51e in the plate parts 51b of the frame member 51 frombelow the supporting mechanism 50 shown in FIG. 7. In this process, as shown in FIG. 9, the shaft part 32a comes into contact with the slant part 52f in the arm 52a of the movable member 52.

Since swing in the A direction of the movable member 52 is limited by engagement between the recess 52j of the arm 52a and the projection 51g of the plate part 51b, when the shaft part 32a is inserted in the arrow Z2 direction, the movable member 52 slides in the arrow Y2 direction against the bias force of the spring member 53. That is, the movable member 52 is retracted from the notch 51e in the arrow Y2 direction. Concurrently, the spindle 54 also moves in the arrow Y2 direction together with the movable member 52 along the groove 51f in the plate part 51b.

Thereafter, when the shaft part 32a of the bracket 32 holding the magnetic head 31 is moved to the position shown in FIG. 3, the movable member 52 and the spindle 54 slide in the arrow Y1 direction by the bias force of the spring member 53, and return to the predetermined position. The shaft part 32a of the bracket 32 holding the magnetic head 31 is thus supported by the notch 52i in the arm 52a. In this manner, the magnetic head 31 is attached to the supporting mechanism 50.

Next, with reference to FIGS. 3, 7, 10 and 11, the operation of the cardprocessing apparatus 100 according to the present embodiment, when the magnetic head 31 is detached, will be described.

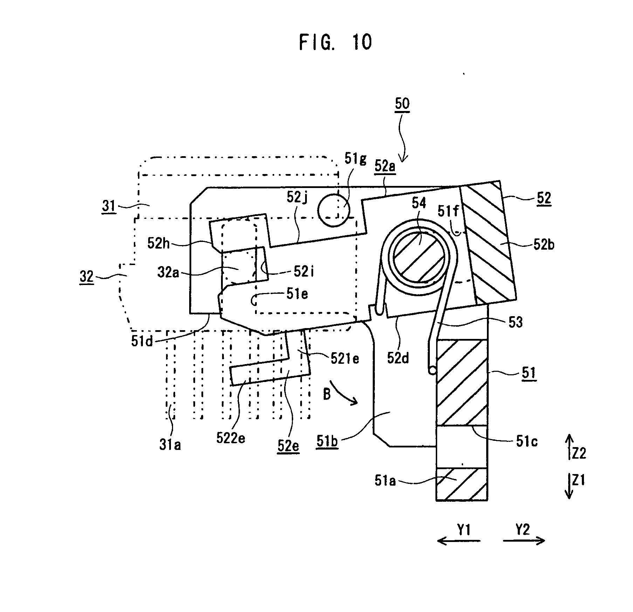

First, the worker pulls the horizontal part 522e of the hook 52e in the B direction from below the supporting mechanism 50 shown in FIG. 3, so that the arm 52a is swung in the B direction against the bias force of the spring member 53. Concurrently, as shown in FIG. 10, the shaft part 32a supported in the notch 52i in the movable member 52 moves in the arrow Z1 direction along the notch 51e in the frame member 51.

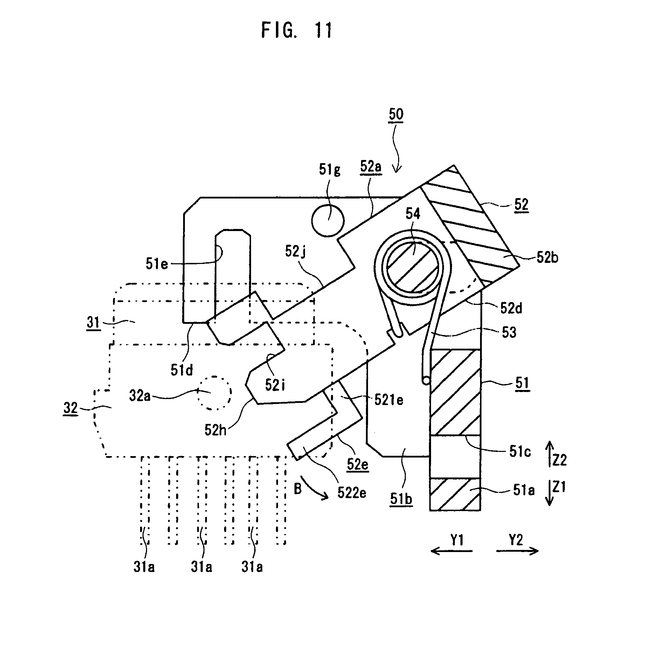

As shown in FIG. 11, when the movable member 52 is further swung in the B direction, the state where the notch 51e in the frame member 51 and the notch 52i in the movable member 52 cross each other vanishes. Hence, the shaft part 32a disengages from the notches 51e and 52i, and the magnetic head 31 is detached from the supporting mechanism 50. Thereafter, when the worker releases the hook 52e, the movable member 52 swings in the A direction by the bias force of the spring member 53, and returns to the predetermined position shown in FIG. 7.

In the present embodiment, as described above, by forming the hook 52e in the arm 52a of the movable member 52, the arm 52a can be easily swung by using the hook 52e without lifting the coupling part 52b of the movable member 52. Thus, even if it is difficult to lift the coupling part 52b because of a disposition of other components (not shown) of the cardprocessing apparatus 100 adjacent to the coupling part 52b of the movable member 52, the arm 52a can be swung by using the hook 52e without disassembling the components. Therefore, the magnetic head 31 can be easily attached and detached. In addition, since it is unnecessary to prepare a space into which a finger or the like of the worker is inserted for lifting up the coupling part 52b of the movable member 52, the card processing apparatus 100 can be miniaturized.

In the present embodiment, since the hook 52e is formed in an L shape so as to project downward from the lower end 51d of the frame member 51, the magnetic head 31 can be easily attached and detached from below the supporting mechanism 50.

In the present embodiment, the movable member 52 is slidably attached to the frame member 51 and the slant part 52f is formed at the lower end 52d of the movable member 52. Hence, by inserting the shaft part 32a of the bracket 32 holding the magnetic head 31 into the notch 51e in the frame member 51, the shaft part 32a comes into contact with the slant part 52f in the movable member 52. Consequently, the movable member 52 can be slid in the arrow Y2 direction. Therefore, by inserting the shaft part 32a in the notch 51e, the shaft part 32a can be disposed in a region where the notches 51e and 52i cross each other, and thus the magnetic head 31 can be attached more easily.

In the present embodiment, since the shaft part 32a of the bracket 32 holding the magnetic head 31 is disposed in the region where the notches 51e and 52i cross each other, the magnetic head 31 can be attached and detached by swinging or sliding the movable member 52, without using a fastening member such as a screw.

In the present embodiment, in the case where a warp occurs in the card 200 when the card 200 and the magnetic head 31 come into contact with each other, the magnetic head 31 swings in the C direction around the shaft part 32a as a center in accordance with the warp of the card 200. Therefore, even if a warp occurs in the card 200, a process can be properly performed on the card 200.

In the present embodiment, by disposing the magnetic head 31 between the pair of arms 52a, the magnetic head 31 can be suppressed from moving in the arrow X1 direction and the arrow X2 direction when the card 200 comes into contact with the magnetic head 31.

The present invention can employ various embodiments other than the foregoing embodiment. For instance, in the foregoing embodiment, although the example in which the present invention is applied to the card processing apparatus 100 mounted in the ATM 150 has been described, the present invention is not limited thereto but may be applied to a card processing apparatus mounted in other higher-order apparatus such as an entry/exit management apparatus.

In the foregoing embodiment, the example in which the slant part 52f is formed in the arm 52a has been described. However, the present invention is not limited thereto. The slant part 52f may not be formed in the arm 52a. In this case, by swinging the arm 52a in the B direction using the hook 52e, the magnetic head 31 can be attached to the supporting mechanism 50.

In the foregoing embodiment, the example in which the hooks 52e are formed in both of the pair of arms 52a has been described. However, the present invention is not limited thereto. The hook 52e may be formed in only one of the pair of arms 52a.

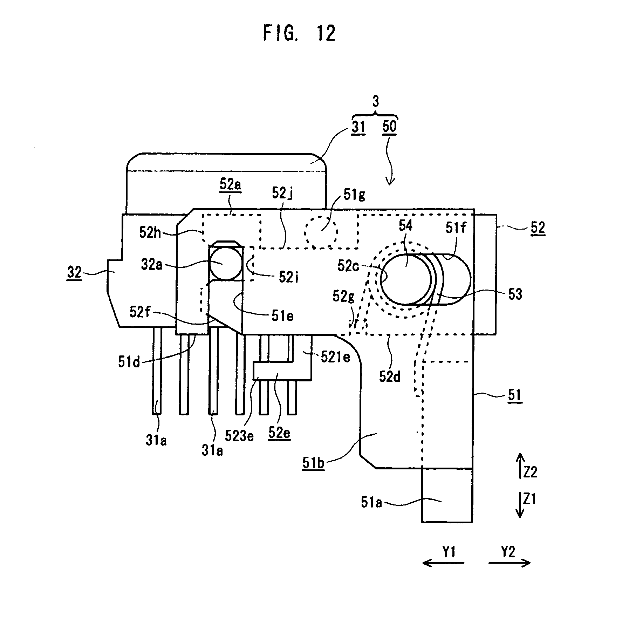

In the foregoing embodiment, as shown in FIG. 3, the example in which the horizontal part 522e of the hook 52e is disposed below the notch 51e in the frame member 51 in the arrow Y1 and Y2 directions has been described. However, the present invention is not limited thereto. Like a hook 52e according to a first modification of the present embodiment shown in FIG. 12, a horizontal part 523e may not be disposed below the notch 51e in the frame member 51 in the arrow Y1 and Y2 directions. With such a configuration, in the case where the magnetic head 31 is attached to the supporting mechanism 50, when the shaft part 32a of the bracket 32 holding the magnetic head 31 is inserted in the notch 51e in the frame member 51, the magnetic head 31 can be moved in the arrow Z2 direction without being hindered by the horizontal part 523e of the hook 52e.

In the foregoing embodiment, the example in which the hook 52e has the vertical part 521e extending in the arrow Z1 direction from the lower end 52d and the horizontal part 522e extending in the arrow Y1 direction from the front end of the vertical part 521e has been described. However, the present invention is not limited thereto. The hook 52e may have a horizontal part extending in a direction other than the arrow Y1 direction from the front end of the vertical part 521e.

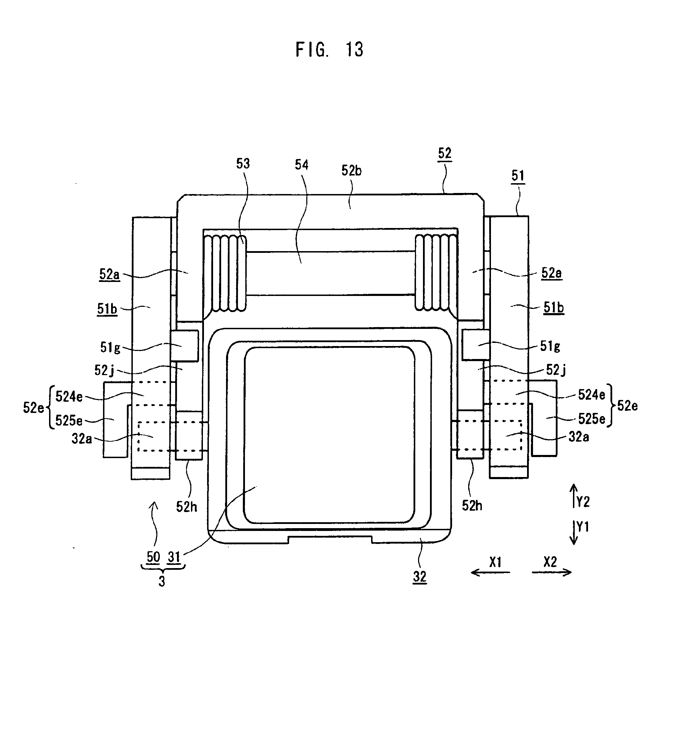

For example, as in a secondmodification of the present embodiment shown in FIG. 13, the hook 52e may have a first horizontal part 524e extending outward from the front end of the vertical part 521e and a second horizontal part 525e extending in the arrow Y1 direction from a front end of the first horizontal part 524e. With such a configuration, in a manner similar to the first modification, when the shaft part 32a of the bracket 32 holding the magnetic head 31 is inserted into the notch 51e of the frame member 51, the magnetic head 31 can be moved in the arrow Z2 direction without being hindered by the second horizontal part 525e of the hook 52e. Moreover, since a distance between the hook 52e and the spindle 54 becomes longer compared with the first modification, a force to be applied to the hook 52e for swinging the movable member 52 can be reduced.

In the foregoing embodiment, the example in which the recess 52j of the arm 52a and the projection 51g of the plate part 51b function as a swing limiting part that limits swing of the arm 52a in the A direction has been described. However, the present invention is not limited thereto. For example, the upper end of the arm 52a at which no recess is formed and the projection 51g of the plate part 51b may function as the swing limiting part.

In the foregoing embodiment, the example in which the groove 51f is formed in the frame member 51 and the insertion hole 52c is formed in the movable member 52 so that the movable member 52 and the spindle 54 slide has been described. However, the present invention is not limited thereto. By forming an insertion hole in the frame member 51 and forming a groove in the movable member 52, only the movable member 52 may slide.

In the foregoing embodiment, the example in which the spindle 54 made of metal is inserted in the insertion hole 52c in the movable member 52 made of resin has been described. However, the present invention is not limited thereto. The movable member and the spindle may be integrally formed with resin.

It should also be understood that although the foregoing description has been made on preferred embodiments, the invention is not limited thereto and various changes and modifications, for example, by combining features of the above-described embodiments, may be made without departing from the spirit of the invention and the scope of the appended claims.

### Reference Signs List

- 31: magnetic head
- 32a: shaft part
- 50: supporting mechanism (supporting apparatus)
- 51: frame member
- 51b: plate part
- 51d: lower end
- 51e: notch (first notch)
- 52: movable member
- 52a: arm
- 52e: hook
- 52f: slant part
- 52h: front end
- 52i: notch (second notch)
- 53: spring member (biasing member)
- 100: card processing apparatus
- 200: card

## Claims

1. A supporting apparatus (50) for a magnetic head (31) comprising:
a frame member (51) having a pair of plate parts (51b) disposed so as to face each other;
a movable member (52) swingably provided for the frame member (51) and having a pair of arms (52a);
a biasing member (53) that biases the movable member (52) so that the movable member (52) is disposed in a predetermined position,
a first notch (51e) that is formed in the pair of plate parts (51b) so as to extend in a first direction,
a second notch (52i) that is formed in the pair of arms (52a) so as to extend in a second direction which crosses the first direction,
and a shaft part (32a) provided for the magnetic head (31) being disposed in a region where the first and second notches (51e, 52i) cross each other,
**characterized in that**
a hook (52e) is formed in the pair of arms (52a).

2. The supporting apparatus (50) for a magnetic head (31) according to claim 1, **characterized in that**
the first notch (51e) is formed at a lower end (51d) of the plate part (51b),
the second notch (52i) is formed at a front end (52h) of the arm (52a), and
the hook (52e) is formed at a lower end (52d) of the arm (52a) so as to project downward.

3. The supporting apparatus (50) for a magnetic head (31) according to claim 2, **characterized in that**
the movable member (52) is slidably provided for the frame member (51), and
at the lower end (52d) of the arm (52a), a slant part (52f) is formed in a region corresponding to the first notch (51e).

4. The supporting apparatus (50) for a magnetic head (31) according to at least one of claims 1 to 3, **characterized in that**
the hook (52e) has a vertical part (521e) extending from the lower end (52d) of the arm (52a) and a horizontal part (522e, 523e) extending from a front end of the vertical part (521e).

5. The supporting apparatus (50) for a magnetic head (31) according to claim 4, **characterized in that**
the horizontal part (523e) is disposed so as not to be positioned below the first notch (51e) in the frame member (51).

6. The supporting apparatus (50) for a magnetic head (31) according to claim 4 or 5, **characterized in that**
the horizontal part includes a first horizontal part (524e) extending outward from the front end of the vertical part (521e) and a second horizontal part (525e) extending from a front end of the first horizontal part (524e).

7. The supporting apparatus (50) for a magnetic head (31) according to at least one of claims 1 to 6, **characterized in that**
the frame member (51) is provided so that the pair of plate parts (51b) is perpendicular to a card insertion direction,
the movable member (52) is disposed between the pair of plate parts (51b), and
the magnetic head (31) is disposed between the pair of arms (52a).

8. A card processing apparatus (100) being **characterized by** comprising:
a magnetic head (31) provided with a shaft part (32a) and performing a process on a card (200), and
a supporting apparatus (50) for the magnetic head (31) according to at least one of claims 1 to 7.

## Patentansprüche

1. Haltevorrichtung (50) für einen Magnetkopf (31), mit:
einem Rahmenelement (51) mit einem Paar Plattenteile (51b), die so angeordnet sind, dass sie einander zugewandt sind;
einem beweglichen Element (52), das schwenkbar für das Rahmenelement (51) vorgesehen ist und ein Paar Arme (52a) aufweist;
einem Vorspannelement (53), das das bewegliche Element (52) so vorspannt, dass das bewegliche Element (52) in einer vorgegebenen Position angeordnet ist,
einer ersten Einkerbung (51e), die in dem Paar Plattenteile (51b) so ausgebildet ist, dass sie in einer ersten Richtung verläuft,
einer zweiten Einkerbung (52i), die in dem Paar Arme (52a) so ausgebildet ist, dass sie in eine zweite Richtung verläuft, die die erste Richtung kreuzt,
und einem Wellenteil (32a), das für den Magnetkopf (31) vorgesehen ist, das in einem Bereich angeordnet ist, in dem die erste und zweite Einkerbung (51e, 52i) einander kreuzen,
**dadurch gekennzeichnet, dass**
ein Haken (52e) in dem Paar Arme (52a) ausgebildet ist.

2. Haltevorrichtung (50) für einen Magnetkopf (31) nach Anspruch 1, **dadurch gekennzeichnet, dass**
die erste Einkerbung (51e) an einem unteren Ende (51d) des Plattenteils (51b) ausgebildet ist,
die zweite Einkerbung (52i) an einem vorderen Ende (52h) des Arms (52a) ausgebildet ist, und
der Haken (52e) an einem unteren Ende (52d) des Arms (52a) so ausgebildet ist, das er nach unten vorsteht.

3. Haltevorrichtung (50) für einen Magnetkopf (31) nach Anspruch 2, **dadurch gekennzeichnet, dass**
das bewegliche Element (52) verschiebbar für das Rahmenelement (51) vorgesehen ist, und
am unteren Ende (52d) des Arms (52a) ein schräges Teil (52f) in einem Bereich ausgebildet ist, der der ersten Einkerbung (51e) entspricht.

4. Haltevorrichtung (50) für einen Magnetkopf (31) nach mindestens einem der Ansprüche 1 bis 3, **dadurch gekennzeichnet, dass**
der Haken (52e) ein vertikales Teil (521e) aufweist, das vom unteren Ende (52d) des Arms (52a) verläuft, und ein horizontales Teil (522e, 523e) aufweist, das von einem vorderen Ende des vertikalen Teils (521e) verläuft.

5. Haltevorrichtung (50) für einen Magnetkopf (31) nach Anspruch 4, **dadurch gekennzeichnet, dass**
das horizontale Teil (523e) so angeordnet ist, dass es nicht unter der ersten Einkerbung (51e) im Rahmenelement (51) positioniert wird.

6. Haltevorrichtung (50) für einen Magnetkopf (31) nach Anspruch 4 oder 5, **dadurch gekennzeichnet, dass**
das horizontale Teil ein erstes horizontales Teil (524e) einschließt, das von dem vorderen Ende des vertikalen Teils (521e) nach außen verläuft, und ein zweites horizontales Teil (525e) einschließt, das von einem vorderen Ende des ersten horizontalen Teils (524e) verläuft.

7. Haltevorrichtung (50) für einen Magnetkopf (31) nach mindestens einem der Ansprüche 1 bis 6, **dadurch gekennzeichnet, dass**
das Rahmenelement (51) so vorgesehen ist, dass das Paar Plattenteile (51b) senkrecht zu einer Karteneinführungsrichtung ist,
das bewegliche Element (52) zwischen dem Paar Plattenteile (51b) angeordnet ist, und
der Magnetkopf (31) zwischen dem Paar Arme (52a) angeordnet ist.

8. Kartenverarbeitungsvorrichtung (100), die **dadurch gekennzeichnet ist, dass** sie Folgendes umfasst:
einen Magnetkopf (31), der mit einem Wellenteil (32a) versehen ist und einen Vorgang auf einer Karte (200) durchführt, und
eine Haltevorrichtung (50) für den Magnetkopf (31) nach mindestens einem der Ansprüche 1 bis 7.

## Revendications

1. Dispositif de support (50) pour une tête magnétique (31) comportant :
un élément de châssis (51) ayant une paire de parties de plaque (51b) disposées de manière à se faire face,
un élément mobile (52) agencé de manière oscillante pour l'élément de châssis (51) et ayant une paire de bras (52a),
un élément de sollicitation (53) qui sollicite l'élément mobile (52) de sorte que l'élément mobile (52) est disposé dans une position prédéterminée,
une première encoche (51e) laquelle est formée dans une paire de parties de plaque (51b) de manière à s'étendre dans une première direction,
une seconde encoche (52i) laquelle est formée dans la paire de bras (52a) de manière à s'étendre dans une seconde direction qui croise la première direction,
et une partie d'arbre (32a) prévue pour la tête magnétique (31) étant disposée dans une région où les première et seconde encoches (51e, 52i) se croisent,
**caractérisé en ce que**
un crochet (52e) est formé dans la paire de bras (52a).

2. Dispositif de support (50) pour une tête magnétique (31) selon la revendication 1, **caractérisé en ce que**
la première encoche (51e) est formée au niveau d'une extrémité inférieure (51d) de la partie de plaque (51b),
la seconde encoche (52i) est formée au niveau d'une extrémité avant (52h) du bras (52a), et
le crochet (52e) est formé au niveau d'une extrémité inférieure (52d) du bras (52a) de manière à faire saillie vers le bas.

3. Dispositif de support (50) pour une tête magnétique (31) selon la revendication 2, **caractérisé en ce que**
l'élément mobile (52) est agencé par coulissement pour l'élément de châssis (51), et
au niveau de l'extrémité inférieure (52d) du bras (52a), une partie inclinée (52f) est formée dans une région correspondant à la première encoche (51e).

4. Dispositif de support (50) pour une tête magnétique (31) selon au moins l'une des revendications 1 à 3, **caractérisé en ce que**
le crochet (52e) a une partie verticale (521e) s'étendant depuis l'extrémité inférieure (52d) du bras (52a) et une partie horizontale (522e, 523e) s'étendant depuis une extrémité avant de la partie verticale (521e).

5. Dispositif de support (50) pour une tête magnétique (31) selon la revendication 4, **caractérisé en ce que**
la partie horizontale (523e) est disposée de manière à ne pas être positionnée au-dessous de la première encoche (51e) dans l'élément de châssis (51).

6. Dispositif de support (50) pour une tête magnétique (31) selon la revendication 4 ou 5, **caractérisé en ce que**
la partie horizontale inclut une première partie horizontale (524e) s'étendant vers l'extérieur depuis l'extrémité avant de la partie verticale (521e) et une seconde partie horizontale (525e) s'étendant depuis une extrémité avant de la première partie horizontale (524e).

7. Dispositif de support (50) pour une tête magnétique (31) selon au moins l'une des revendications 1 à 6, **caractérisé en ce que**
l'élément de châssis (51) est agencé de sorte que la paire de parties de plaque (51b) est perpendiculaire à une direction d'insertion de carte,
l'élément mobile (52) est disposé entre la paire de parties de plaque (51b), et
la tête magnétique (31) est disposée entre la paire de bras (52a).

8. Dispositif de traitement de carte (100) étant **caractérisé en ce qu'**il comporte :
une tête magnétique (31) munie d'une partie d'arbre (32a) et exécutant un processus sur une carte (200), et
un dispositif de support (50) pour la tête magnétique (31) selon au moins l'une des revendications 1 à 7.
